# EUROPEAN PATENT APPLICATION

(11) **EP 1 698 808 A1**
(43) Date of publication of application: **06.09.2006**
(21) Application number: 04820100.8
(22) Date of filing: 10.11.2004
(51) Int. Cl.: F16J 15/32, F16D 25/12

(54) **SEALING DEVICE**

(30) Priority: 10.12.2003 JP 2003411636
(71) Applicant: NOK CORPORATION, Tokyo 105-8585 (JP)
(72) Inventor: Tajima, Toshihiro, c/o Nok Corporation, Fukushima-shi, Fukushima 9601193 (JP)
(74) Representative: TBK-Patent
(86) International application number: PCT/JP2004/016660
(87) International publication number: WO 2005/057057

(57) **Abstract**

A sealing device is high quality, reduces malfunctions in forming a sealing section, and improves durability of the sealing section. In the piston member 11, a part of the outer peripheral skirt section 13 is made as a stepped section to form a part having a smaller diameter (thinner wall) than the end section of the outer peripheral skirt section 13 in the side of the multiple disc clutch 4 in the axial direction, and the end section of the elastomeric member 7 forming the sealing lip 71 is fixed to the stepped section.

## Description

### Technical Field

The present invention relates to a sealing device to be applied to a hydraulic piston of, for example, an automatic transmission for an automobile.

### Background Art

As an automatic transmission used for an automobile, CVT (Continuously Variable Transmission) is widely known, in which the transmission control is performed by controlling a multiple disc clutch with pressure of a hydraulic piston moved in accordance with hydraulic pressure in a rotational state.

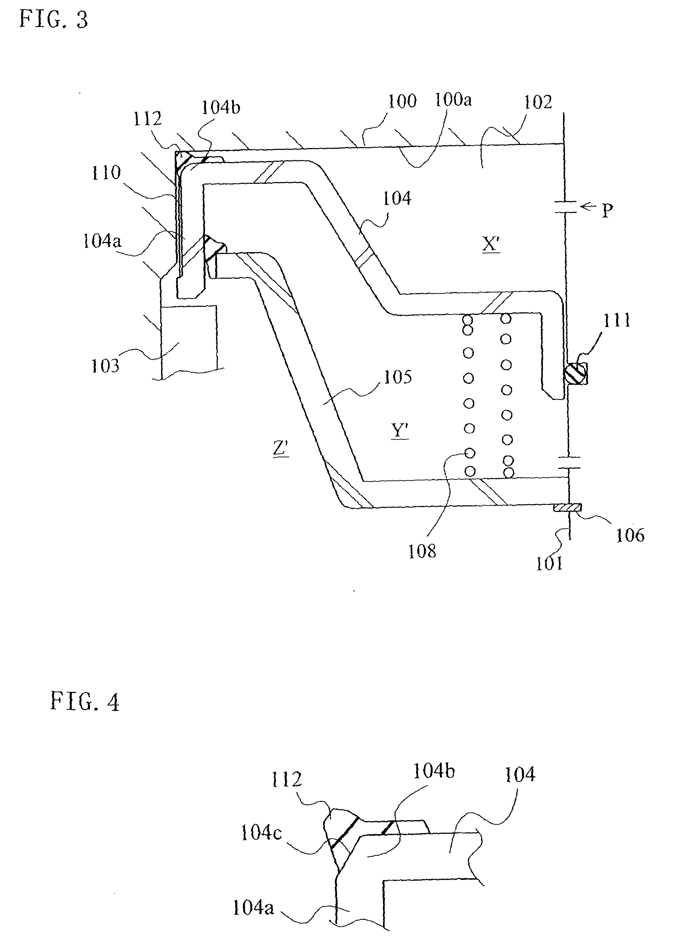

Fig. 3 is a half cross-sectional schematic configuration view for explaining a schematic configuration of a transmission switching section of the CVT.

As shown in Fig. 3, an annular piston inserting hole 102 is formed of an inner peripheral surface of a housing 100, in which a sleeve 101 attached to a shaft (not shown) is inserted, and an outer peripheral surface of the sleeve 101.

A multiple disc clutch 103 is provided inside the housing 100, and an annular piston member 104 is disposed in the piston inserting hole 102 so as to be able to move in the axial direction.

Further, in the outer periphery of the sleeve 101, there is attached an annular cancel plate 105 limiting the movement in the axial direction. The cancel plate is limited in the movement by a stopper 106 provided to the sleeve 101.

And, in an annular groove provided on the outer peripheral surface of the sleeve 101, there is provided an O-ring 111 for sealing an annular gap between the inner peripheral surface of the piston member 104 and the outer peripheral surface of the sleeve 101, and on the outer peripheral surface of the piston member 104, there is provided a sealing lip 112 hermetically abutting on the inner peripheral surface of the housing 100 for sealing the inner peripheral surface thereof.

As described above, a pressure chamber X', an oil chambers Y', and Z' are formed inside the housing 100 in a sectional manner.

In the above configuration, when the hydraulic pressure (denotedwith an arrow P) acts on the pressure chamber X' to increase the pressure, the piston member 104 performs a stroke movement to the cancel plate 105 side (in the downward direction in the drawing) against the urging force of a spring 108 to depress a multiple disc clutch 103 with an edge section of an outer cylindrical section 104a of the piston member 104. Thus, the clutch plate provided to the housing 100 side frictionally engages a clutch plate of the output shaft (not shown) side to transmit rotational driving force of the housing 100 to the output shaft.

Further, when the transmission of power by the multiple disc clutch 103 needs to be released, the piston member 104 is forced to perform a stroke movement to the end surface 100a side of the housing 100 with the urging force of the spring 108 by reducing the pressure in the pressure chamber X' and supplying oil to the oil chamber Y'.

As described above, the piston member 104 moves in the axial direction in accordance with the hydraulic pressure, and functions as a so-called bonded piston seal (a sealing device) with the sealing lip 112 and so on integrally formed with the base member.

Incidentally, if the hydraulic pressure (arrow P) acts on the pressure chamber X' , the pressure of about 2MPa is to be applied to the piston member 104 in the pressure chamber X'. Therefore, in the sealing lip 112 provided to the pistonmember 104, enhancement of the pressure resistance and durability has been intended by providing an elastomeric member 110 to the outer periphery of the piston member 104 to the bottom thereof to increase the contact area with the piston member 104.

However, there is a concern that a problem arises of abnormal wear of the sealing lip and peeling of the elastomeric member 110 provided to the outer periphery of the piston member 104 which are both caused by the sealing lip 112 deformed to press itself against the inner peripheral surface of the housing 100 in accordance with the pressure applied to the piston member 104, because the gap between the piston member 104 and the housing 100 opposing to the piston member 104 is narrow.

Further, there is also a concern that provision of the elastomeric member 110 to outer periphery of the piston member 104 to the bottom thereof requires excess amount of elastomeric material, thus increasing the cost.

Further, if it is attempted to provide a sufficient gap between the elastomeric member 110 provided to the outer periphery of the piston member 104 and the housing 100, the inside diameter of the piston member 104 must be reduced in accordance with the thickness of the elastomeric member 110, and therefore, there is a further concern that a load to the mold becomes heavy if the piston member 104 is formed by die forming.

Therefore, what performs rubber control of the elastomeric member with a tapered section 104c formed by squashing (pressing again) the corner section 104b of the piston member 104 formed by die forming (e.g., press forming) as shown in Fig. 4 is known (see Patent Document 1, for example).
Patent Document 1: JP-A-9-189336

### Disclosure of the Invention

### Problems that the Invention is to Solve

However, if the rubber control is performed by the tapered section 104c, it is concerned that, if the plate thickness of the piston member 104 is varied, the position of the tapered section 104c is not settled well in the die to cause a gap between the piston member 104 and the die, resulting in occurrence of malfunctions such as rubber leakage, in which the elastomeric material flows in the gap. Therefore, needs for controlling the diameter of the rubber control must arise.

Further, it is also concerned that, since the contact area between the elastomeric member 110 and the piston member 104 is small, the oscillating deformation of the sealing lip 112 in accordance with the high pressure is not stabilized resulting in inferior pressure resistance and durability.

The invention is made for solving the problems of the prior art described above, and has an object of providing a high quality sealing device capable of reducing defects in forming a sealing section, and improving durability of the sealing section.

### Means for Solving the Problem

As a substance, in order for achieving the above object, in the invention, an axial section to be provided with the sealing lip is formed to be a stepped shape with thinner wall section, and an end section of the sealing body is fixed to the stepped section.

Namely, the invention is a sealing device having an annular member disposed in an annular hole movable in an axial direction and including a radial section and an axial section extending in the axial direction from at least one of an inner end and an outer end of the radial section, and a sealing body including a sealing lip disposed over the radial section and the axial section of the annular member and hermetically abutting on a periphery of the annular hole, the sealing device sealing one side and the other side of the annular member in the axial direction, characterized in that a stepped section with thinner wall is provided to the axial section adjacent to a root of the sealing lip, and that an end section of the sealing body is disposed to the stepped section.

Here, the root of the sealing lip is positioned adjacent to a corner section forming the betweenness of the radial section and the axial section of the annular member, and accordingly, it can be said that the stepped section is formed adjacent to the corner section. Further, it can also be said that the stepped section is positioned in the area of transition from the axial section to the corner section of the annular member or positioned adjacent to that area.

As described above, in the invention, since the end section of the sealing body is fixed to the stepped section, even if the plate thickness of the annular member is varied, the annular member can more preferably be disposed to a predetermined position in the die than in performing the rubber control by the tapered section as in the prior art. Therefore, occurrence of the malfunctions such as rubber leakage can be reduced, and control of the rubber control diameter also becomes easy.

Further, the contact area between the sealing body and the annular member can be increased compared to the conventional case of performing rubber control by the tapered section, thus it can be intended to improve the pressure resistance and durability of the sealing body.

Further, since there is no need for providing the sealing body up to the end section (the opposite side of the corner section) of the axial section, the amount of wasted part of the sealing body (forming material) can be reduced.

Further, since there is no need for providing the sealing body up to the end section (the opposite section to the corner section) of the axial section, the inside diameter of the annular member does not need to be formed smaller as much as the thickness of the sealing body, as required in the conventional case, and if the annular member is formed by die forming, there is no possibility of increasing the load for the die.

Further, in the above configuration, the annular member is preferably a piston member capable of freely sliding in the axial direction while hermetically dividing the annular space in the annular hole.

### Advantage of the Invention

According to the invention a high quality sealing device capable of reducing defects in forming a sealing section, and improving durability of the sealing section can be provided.

### Brief Description of the Drawings

[Fig. 1] Fig. 1(a) is a schematic configuration view of a sealing device according to an embodiment of the invention, and Fig. 1 (b) is an enlarged view of the A section shown in Fig. 1 (a) .
[Fig. 2] Fig. 2 is a schematic configuration view of a transmission switching section applying the sealing device according to the embodiment of the invention.
[Fig. 3] Fig. 3 is a schematic configuration view of a transmission switching section applying a sealing device according to the prior art.
[Fig. 4] Fig. 4 is an enlargedviewof a section corresponding to a substantial part of Fig. 3.

### Best Mode for Carrying Out the Invention

Hereinafter, with reference to the drawings, the best mode for carrying out the invention will be explained in detail as an exemplification. Note that sizes, materials, shapes, relative arrangements of composing elements and so on described in the embodiment should appropriately be modified in accordance with the configurations or various conditions of devices applying the invention, and therefore, are not intended to limit the scope of the invention to the embodiment.

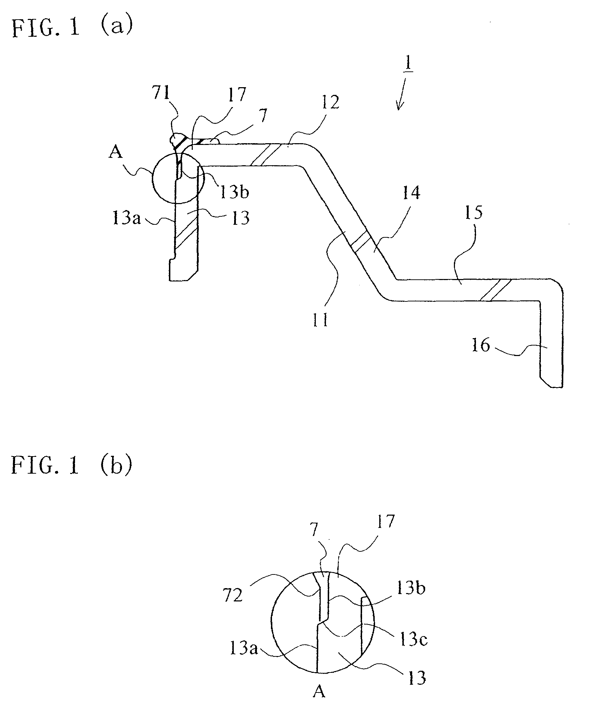

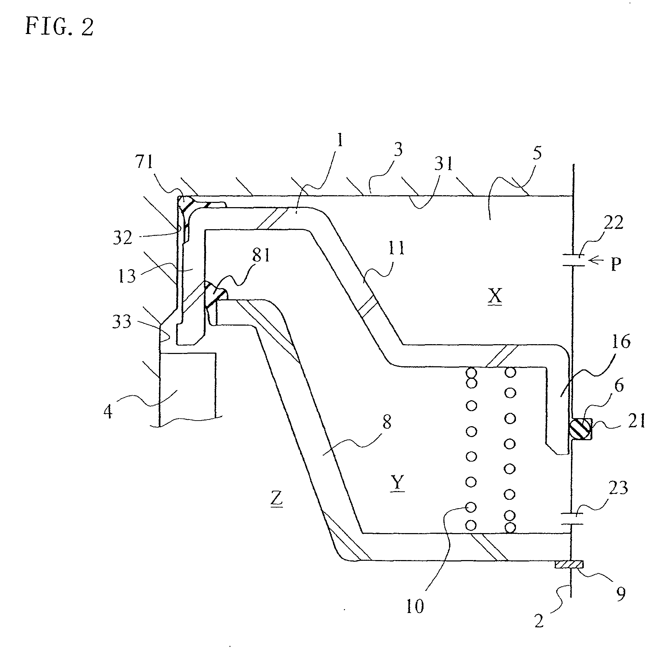

Fig. 1 is a half cross-sectional schematic configuration view showing a bonded piston seal 1 as the sealing device according to an embodiment of the invention. Fig. 2 is a half cross-sectional schematic configuration view for explaining a schematic configuration of a transmission switching section applying the bonded piston seal 1 as the sealing device according to the embodiment of the invention. The bonded piston seal 1 is used for reducing the effect of the centrifugal hydraulic pressure acting on the hydraulic piston used for an automatic transmission for an automobile such as the CVT.

Hereinafter, the bonded piston seal 1 according to the embodiment of the invention and the configuration of the transmission switching section applying the bonded piston seal 1 will be explained.

As shown in Fig. 2, the transmission switching section is provided with a sleeve 2 attached to a rotating shaft (not shown) and a housing 3 substantially L-shaped in the cross-section of the inner shape and disposed in the outer periphery of the sleeve 2.

The housing 3 includes a radial section 31, and first and second circular sections 32, 33. A multiple disc clutch 4 is housed in the inner periphery side of the second circular section 33 having a larger inside diameter than the first circular section 32. Note that the sealing device according to the present embodiment can also be used for an ON/OFF device for a brake system as a brake plate.

And, a piston inserting hole (an annular hole) 5 having an annular shape is formed as the betweenness of the inner peripheral surface of the first circular section 32 and the outer peripheral surface of the sleeve 2, and a piston member 11 as the annular member is inserted in the piston inserting hole 5 so as to be able to freely move in the axial direction.

The piston member 11 is a metal ring formed of thin sheet steel (e.g., SPCC), and is composed of an end wall 12 shaped like a washer and facing an end surface of the radial section 31 of the housing 3, an outer peripheral skirt section 13 extending from the end of the outer diameter of the endwall 12 in the axial direction towards the multiple disc clutch 4 side, a slanted section 14 extending from the end of the inner diameter of the end wall 12 in a direction towards the inner diameter and slanted in the axial direction towards the multiple disc clutch 4 side, a radial section 15 extending from the end of the inner diameter of the slanted section 14 in the inner diameter direction, and an inner peripheral skirt section 16 extending from the end of the inner diameter of the radial section 15 in the axial direction towards the multiple disc clutch 4 side. Here, the outer peripheral skirt section 13 forms an axial section of the invention, and the end wall 12, the slanted section 14, and the radial section 15 form a radial section of the invention. Further, the piston member 11 is formed by die forming (e.g., press forming).

And, the annular groove 21 provided in the inner peripheral side of the inner peripheral skirt section 16 and on the outer peripheral surface of the sleeve 2, is accommodated with an O-ring 6 capable of sliding closely along the inner peripheral surface of the inner peripheral skirt section 16.

Further, a corner section 17 between the outer peripheral skirt section 13 and the end wall 12 is provided with an elastomeric member 7 as a sealing body forming a sealing lip 71 integrally fixed thereto by baking.

The sealing lip 71 extends towards the radial section 31 of the housing 3 in the axial direction and slants so as to open towards outer in the radial direction, and the tip of the lip hermetically abuts on the inner peripheral surface of the first circular section 32 of the housing 3 so as to be able to freely slide thereon.

As described above, a pressure chamber X is formed between the piston member 11 and the housing 3 via the sealing lip 71 and the O-ring 6.

Further, a cancel plate 8 as an annular limiting member whose axial movement is limited is provided opposing the piston member 11 in the outer periphery side of the sleeve 2. The cancel plate 8 is a metal ring formed of thin sheet steel (e.g., SPCC), and designed to have an inside diameter capable of being freely attached to and detached from the sleeve 2, and the movement in the axial direction, specifically in the direction away form the piston member 11, is limited by the stopper 9.

And, the outer diameter of the cancel plate 8 is set to be smaller than the inside diameter of the outer peripheral skirt section 13 of the piston member 11.

Namely, the cancel plate 8 is a metal ring extending from the sleeve 2 to the outer peripheral skirt section 13 of the piston member 11 in the radial direction, and is provided with a sealing lip 81 as a sealing member for hermetically abutting on the inner peripheral surface of the outer peripheral skirt section 13 of the piston member 11 so as to be able to freely slide thereon in the end of the outer diameter thereof.

As described above, the oil chamber Y is formed between the cancel plate 8 and the piston member 11, while separating from the oil chamber Z of the side of the multiple disc clutch 4.

Note that the sleeve 2 is provided with a path 22 communicated with the pressure chamber X and a path 23 communicated with the oil chamber Y.

And, a plurality of springs 10 as urging means for biasing the piston member 11 in the direction away from the cancel plate 8 between the cancel plate 8 and the piston member 11 in the circumferential direction there of.

In the above configuration, the oil is supplied to the oil chamber Y via the path 23 of the sleeve 2, and when the pressure chamber X becomes in low pressure, since the urging force of the springs 10 is applied to the piston member 11, the piston member 11 is in a state of rest while the sealing lip 71 abuts on the radial section 31 of the housing 3.

Further, when the hydraulic pressure P acts on the pressure camber X via the path 22 of the sleeve 2 to rise the pressure, the piston member 11 moves towards the multiple disc clutch 4 against the biasing force of the springs 10, and pushes the multiple disc clutch 4 with the end section of the outer peripheral skirt section 13 of the piston member 11 to transmit the power.

And, when the transmission of the power is to be released, the piston member 11 is moved in the axial direction towards the radial section 31 of the housing 3 with the biasing force of the springs 10 by supplying the oil to the oil chamber Y to lower the pressure in the pressure chamber X. Thus, the piston member 11 returns to the original position.

A distinguishing configuration of the present embodiment will now be explained.

In the present embodiment, in the piston member 11, a part of the outer peripheral skirt section 13 is made as a stepped section to form a part having a smaller diameter (thinner wall) than the end section of the outer peripheral skirt section 13 in the side of the multiple disc clutch 4 in the axial direction, and the end section of the elastomeric member 7 forming the sealing lip 71 is fixed to the stepped section.

Namely the outer peripheral skirt section 13 is provided with a first axial section 13a in the side of the multiple disc clutch 4, a second axial section 13b disposed between the first axial section 13a and the corner section 17 and having a smaller diameter (thinner wall) than the first axial section13a, and a step section 13c disposed between the first axial section 13a and the second axial section 13b, and the elastomeric member 7 covers the first axial section 13a, and the rubber thereof is stopped at the step section 13c. Here, the second axial section 13b and the step section 13c form the stepped section.

Note here that, the position where the step section 13c is formed between the first axial section 13a and the second axial section 13b is not particularly limited so long as it is around a root 72 of the sealing lip 71 (or adjacent to the corner section 17), however, the position about 1mm distant from the root 72 (the root of the sealing lip 71 extending from the elastomeric member 7) of the sealing lip 71 towards the multiple disc clutch 4 in the axial direction is preferable. Further, in the step section 13c, the smaller the angle with respect to the radial direction the better.

As described above, in the present embodiment, since the stepped section composed of the second axial section 13b and the step section 13c is provided and the end section of the elastomeric member 7 is fixed to the stepped section, even if the plate thickness of the piston member 11 formed by die forming (e.g., press forming) is varied, the piston member 11 can more preferably be disposed on a predetermined position in the die than the conventional case in which the corner section 17 is formed to be a tapered shape and rubber control is performed by the tapered section. Therefore, occurrence of the malfunctions such as rubber leakage canbe reduced, and control of the rubber control diameter also becomes easy.

Further, since the contact area between the elastomeric member 7 forming the sealing lip 71 and the piston member 11 can be increased in comparison to the conventional case shown in Fig. 4 with the corner section 17 formed to be tapered shape, thus it can be intended to improve the pressure resistance and durability of the elastomeric member 7 integrally formed with the piston member 11.

Further, since there is no need for providing the elastomeric member 7 to the end section of the first axial section 13a, as is required in the prior art shown in Fig. 3, amount of wasteful elastomeric member 7 can be reduced.

Further, since there is no need for forming the inside diameter of the piston member 11 smaller as much as the thickness for disposing the elastomeric member 7 by providing the second axial section 13b and the step section 13c forming a stepped shape with respect to the first axial section 13a, if the piston member 11 is formed by the press forming, for example, the possibility of a load applied to the die can be eliminated.

Note that although in the present embodiment the case is described in which the elastomeric member 7 forming the sealing lip 71 is integrally fixed by burning to the corner section 17 between the outer peripheral skirt section 13 and the end wall section 12, the invention can preferably be applied to the case in which the sealing lip is provided to the corner section between the inner peripheral skirt section 16 and the radial section 15.

### Industrial Applicability

As described above, the sealing device according to the invention is useful for sealing between the one side and the other side of annular member in the axial direction, and in particular, it is suitable for applying to the hydraulic piston for an automatic transmission for an automobile and so on.

## Claims

1. A sealing device comprising:
an annular member disposed in an annular hole, movable in an axial direction, and including a radial section and an axial section extending in the axial direction from at least one of an inner end and an outer end of the radial section, and
a sealing body including a sealing lip disposed over the radial section and the axial section of the annular member and hermetically abutting on a periphery of the annular hole,
the sealing device sealing one side and the other side of the annular member in the axial direction, wherein:
a stepped section with thinner wall is provided to the axial section adjacent to a root of the sealing lip; and
an end section of the sealing body is disposed to the stepped section.
